# EUROPEAN PATENT SPECIFICATION

(11) **EP 3 483 950 B1**
(45) Date of publication and mention of the grant of the patent: **20.01.2021**
(21) Application number: 18203776.2
(22) Date of filing: 31.10.2018
(51) Int. Cl.: H01M 4/04, H01M 4/38, H01M 4/587, H01M 4/72, H01M 10/052

(54) **METHOD OF MANUFACTURING LITHIUM ION BATTERY DEVICE AND LITHIUM ION BATTERY DEVICE**
VERFAHREN ZUR HERSTELLUNG EINER LITHIUM-IONEN-BATTERIEVORRICHTUNG SOWIE LITHIUM-IONEN-BATTERIEVORRICHTUNG
PROCÉDÉ DE FABRICATION D'UN DISPOSITIF DE BATTERIE AU LITHIUM-ION ET DISPOSITIF DE BATTERIE AU LITHIUM-ION

(30) Priority: 10.11.2017 JP 2017217679
(43) Date of publication of application: 15.05.2019
(73) Proprietor: SUMITOMO RUBBER INDUSTRIES, LTD., Kobe-shi, Hyogo-ken 651-0072 (JP)
(72) Inventor: KUBO, Tatsuya, Kobe-shi, Hyogo 651-0072 (JP); YAMANO, Akihiro, Yamagata 992-8510 (JP); MORISHITA, Masanori, Yamagata 992-8510 (JP); SAKAI, Tetsuo, Yamagata 992-8510 (JP); FUMIYA, Chujo, Kobe-shi, Hyogo 651-0072 (JP)
(74) Representative: Manitz Finsterwald Patent- und Rechtsanwaltspartnerschaft mbB

(56) References cited:
- EP-A1- 3 054 504
- WO-A1-2016/159058
- JP-A- 2013 058 378

## Description

### TECHNICAL FIELD

The present invention relates to a method of manufacturing a lithium ion battery device and a lithium ion battery device manufactured by the manufacturing method.

### BACKGROUND OF THE INVENTION

Recently attention has been paid to a technique using sulfur as an active material for a lithium ion secondary battery. Sulfur not only is easily available and inexpensive as compared with rare metals but also can increase a charging and discharging capacity of a lithium ion secondary battery. It is known that for example, in a lithium ion secondary battery using sulfur as an active material for a positive electrode, a charging and discharging capacity being about six times that of a lithium ion secondary battery using lithium cobalt(III) oxide, which is a usual positive electrode material, can be achieved. Further, as compared with oxygen, sulfur has advantages such as low reactivity, and less risk of firing and explosion due to over-charging or the like.

Further, JP 2002-154815 A and JP 2015-092449 A disclose active materials prepared by compounding sulfur, a carbon material and the like. By using such a carbon-sulfur composite active material, elution of sulfur into an electrolytic solution can be inhibited and a cycle characteristic of a lithium ion secondary battery can be improved.

Since the above-mentioned sulfur-based active material does not contain a lithium atom, when the sulfur-based active material is used on a lithium ion battery device, it is necessary to mix a lithium metal into an electrode to compensate for a lithium source or to previously perform an operation for allowing lithium ion to be carried on the active material (hereinafter called pre-doping) (JP H05-234621 A and JP H03-233860 A). However, in the secondary battery described in JP H05-234621 A, the active material is in direct contact with the lithium metal, and therefore, there is a danger of heat generation and occurrence of an explosion when a large-sized battery is manufactured. Further, in JP H03-233860 A, it is necessary to manufacture a battery through complicated steps such that a battery is once manufactured for pre-doping and then is disassembled and again assembled.

WO 2000/007255 discloses an organic electrolytic cell subjected to pre-doping of lithium and having a lamination unit comprising a positive electrode and a negative electrode which are provided with a current collector having through-holes. However, if an electrode weight per unit area is increased and the number of electrodes is increased to increase an energy density of a battery, it is anticipated that uniform doping becomes difficult in a lithium ion battery device using a sulfur-based active material having a large capacity. Further, in applying a slurry for an active material layer of a perforated current collector, the slurry easily strikes through perforations and thus, it is difficult to manufacture an electrode having a uniform thickness.
Further prior art methods of manufacturing a lithium-ion secondary battery are disclosed in the following documents EP 3 054 504 A1, WO 2016/159058 A1 and JP 2013 058378 A.

### SUMMARY OF THE INVENTION

An object of the present invention is to provide a method of manufacturing a high capacity lithium ion battery device being usable on large size batteries for EV, demand of which will increase from now on, and large size stationary type batteries by safe and simple doping operation.

The present inventors have made intensive studies to solve the above-mentioned problem and as a result, have found that by conducting perforation of a current collector and an active material layer together after applying an active material to the current collector, fabrication and manufacturing of an electrode become very simple, and pre-doping advances efficiently at the time of pre-doping of lithium ion, and have completed the present invention.

Namely, the present invention relates to:
[1] a method of manufacturing a lithium ion battery device comprising positive electrodes and negative electrodes which are laminated with each other, wherein an active material used on the positive electrodes is a sulfur-based active material having a total sulfur content of not less than 50% by mass measured by an elementary analysis, the method comprising:
   a step of forming, on the positive electrodes and the negative electrodes, through-holes comprising perforating the current collector coated with the active material to form perforations penetrating in a thickness direction of the electrode,
   a step of laminating the positive electrodes and the negative electrodes and disposing a lithium ion feeding source on at least one side of a laminating direction thereof, and
   a step of allowing lithium derived from the lithium ion feeding source to be carried on the positive electrodes or the negative electrodes,
[2] the method of manufacturing a lithium ion battery device according to the above [1], wherein a diameter of openings of the through-holes formed on the positive electrodes and the negative electrodes is 0.05 mm or more and a rate of a hole area is 1.0% or more,
[3] the method of manufacturing a lithium ion battery device according to the above [1] or [2], wherein the positive electrodes and the negative electrodes are laminated so that the through-holes formed on the positive electrodes are aligned with the through-holes formed on the negative electrodes,
[4] the method of manufacturing a lithium ion battery device according to any one of the above [1] to [3], wherein the active material used on the positive electrodes comprises a carbon-sulfur structure having peaks at 500 cm⁻¹, 1,250 cm⁻¹, and 1,450 cm⁻¹ of a Raman shift in a Raman spectrum,
[5] the method of manufacturing a lithium ion battery device according to any one of the above [1] to [4], wherein the negative electrodes have a layer composed of a carbon material, a silicon material, a tin alloy material or a material produced by compounding thereof, and
[6] a lithium ion battery device comprising positive electrodes and negative electrodes which are laminated with each other, wherein an active material used on the positive electrodes is a sulfur-based active material having a total sulfur content of not less than 50% by mass measured by an elementary analysis, wherein through-holes penetrating in a laminating direction of the positive electrodes and the negative electrodes are formed thereon, and
   lithium derived from a lithium ion feeding source disposed on at least one side of a laminating direction is carried on the positive electrodes and the negative electrodes.

According to the present invention, it is possible to manufacture a high capacity lithium ion battery device by safe and simple doping operation.

### BRIEF DESCRIPTION OF THE DRAWINGS

FIG. 1 is a sectional view schematically illustrating a reaction apparatus used for production of a sulfur-based active material.
FIG. 2 is a graph showing a result of a Raman spectrum analysis of a sulfur-based active material obtained in Example 1.
FIG. 3 is a graph showing a result of an FT-IR spectrum analysis of a sulfur-based active material obtained in Example 1.
FIG. 4 is a schematic view showing an electrode arrangement in a lithium ion battery device according to an embodiment of the present disclosure.

### DETAILED DESCRIPTION

A configuration and a manufacturing method of the lithium ion battery device according to Embodiments of the present invention are explained below in detail.

### <Configuration of electrode>

The positive electrode and the negative electrode according to Embodiments of the present invention can be configured in the same manner as in general lithium ion battery devices. For example an electrode for the lithium ion secondary battery according to Embodiments of the present invention can be manufactured by applying an electrode material prepared by mixing an active material, an electrically conductive additive, a binder and a solvent to a current collector.

### (Current collector)

A current collector which is used generally as an electrode for a lithium ion secondary battery can be used as a current collector. Examples of a current collector include aluminum current collectors such as an aluminum foil, an aluminum mesh, a punched aluminum sheet and an expanded aluminum sheet; stainless steel current collectors such as a stainless steel foil, a stainless steel mesh, a punched stainless steel sheet and an expanded stainless steel sheet; nickel current collectors such as expanded nickel and a nonwoven nickel fabric; copper current collectors such as a copper foil, a copper mesh, a punched copper sheet and an expanded copper sheet; titanium current collectors such as a titanium foil and a titanium mesh; and carbon current collectors such as a nonwoven carbon fabric and a woven carbon fabric. Among these, aluminum current collectors are preferable from the viewpoint of a mechanical strength, conductivity, a mass density, cost and the like. Further, a current collector made of a nonwoven carbon fabric and/or a woven carbon fabric which comprises carbon having a high degree of graphitization is suitable as a current collector for a sulfur-based active material since no hydrogen is contained therein and reactivity with sulfur is low. Examples of a starting material for a carbon fiber having a high degree of graphitization include various pitches (namely by-products such as petroleum, coal and coal tar), polyacrylonitrile fiber (PAN) and the like which are starting materials for a carbon fiber.

There is no particular restriction on a shape of the current collector, and for example, a foil substrate, a three-dimensional substrate and the like can be used. When the three-dimensional substrates (foamed metal, mesh, woven fabric, non-woven fabric, expanded metal, etc.) are used, even in the case of a binder lacking in adhesion to a current collector, there is a tendency that an electrode having a high capacity density can be obtained and in addition, a high efficiency charge and discharge characteristic can be obtained satisfactorily.

### (Active material)

A sulfur-based active material is used suitably as an active material. It is noted that in the embodiment of the present disclosure, "a sulfur-based active material" means an active material comprising sulfur elements as component elements, and examples thereof include sulfur element-containing compounds such as elemental sulfur (S), titanium sulfide, molybdenum sulfide, iron sulfide, copper sulfide, nickel sulfide, lithium sulfide and organic disulfide compounds. Further, active materials obtained by compounding sulfur and a carbon material (namely carbon-sulfur composite active materials) can also be used suitably.

A carbon-sulfur structure having a thienoacene structure is used particularly suitably as a carbon-sulfur composite active material. A lithium ion secondary battery using the carbon-sulfur structure on a positive electrode has a large charging and discharging capacity and is excellent in cycle characteristic.

The carbon-sulfur structure has peaks at 500 cm⁻¹, 1250 cm⁻¹, and 1450 cm⁻¹ of a Raman shift in a Raman spectrum. These spectra differ from spectra called D band at 1350 cm⁻¹ and G band at 1590 cm⁻¹ which are seen in a graphite structure of 6-membered ring, and are analogous to thienoacene spectra described in the document (Chem. Phys. Chem., 2009, 10, 3069-3076). Therefore, it is presumed that the carbon-sulfur structure showing the above-mentioned Raman spectra has a thienoacene structure being in a form of a long chain polymer formed by condensation and linking of thiophene rings and represented by the following formula (i).

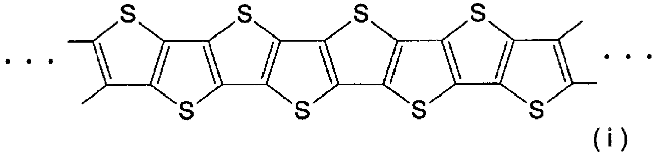

Further, it is preferable that a content of hydrogen of the carbon-sulfur structure is not more than 1.6% by mass, particularly not more than 1.0% by mass. Further, in FT-IR spectrum, it is preferable that the peaks are present at 917 cm⁻¹, 1042 cm⁻¹, 1149 cm⁻¹, 1214 cm⁻¹, 1388 cm⁻¹, 1415 cm⁻¹ and 1439 cm⁻¹.

The carbon-sulfur structure can be prepared, for example, in accordance with the method described in JP 2015-092449 A by compounding sulfur and a vulcanization accelerator and/or a conductive powder to an unvulcanized diene rubber and heat-treating an obtained mixture. The prepared carbon-sulfur structure can be pulverized and classified to be formed into a particle size suitable for producing a positive electrode.

As a total amount of sulfur in the sulfur-based active material is larger, cycle characteristic of the lithium ion secondary battery tends to be improved. Therefore, the total amount of sulfur in the sulfur-based active material by an elemental analysis is preferably 50% by mass or more.

In the case where the sulfur-based active material is a carbon-sulfur composite active material, an amount of sulfur incorporated into molecules of the carbon-sulfur structure may be smaller, a network being large enough for sealing elemental sulfur therein may not be formed and electric conductivity of electron may be decreased due to the sulfur-based active material. As a result, a charging and discharging capacity of the lithium ion secondary battery may be smaller. Further, cycle characteristic may be lowered since elution of sulfur into an electrolytic solution cannot be inhibited sufficiently.

In a system where a carbon material having a graphite structure is compounded as an electrically conductive powder, there may be a case where the sulfur content is decreased below the above-mentioned range due to an influence of the carbon constituting the carbon material. However, an effect of improving cycle characteristic of the lithium ion secondary battery can still be exhibited. In that case, the sulfur content is preferably 45% by mass or more in order to maintain the effect of improving cycle characteristic of the lithium ion secondary battery.

### (Electrically conductive additive)

Examples of an electrically-conductive additive include carbon-based electrically-conductive additives such as vapor grown carbon fibers (VGCF), carbon powders, carbon black (CB), acetylene black (AB), KETJENBLACK (KB), graphite, graphene and carbon tube; fine powders of metals being stable at positive-electrode potentials, such as aluminum and titanium and the like. One or more thereof can be used as the electrically-conductive additive. From the viewpoint of capacity density and input and output characteristic, carbon-based electrically-conductive additives are preferable, and further, from the viewpoint of conductivity and cost, acetylene black (AB) and KETJENBLACK (KB) are preferable.

### (Binder)

Examples of the binder include polyvinylidene difluoride (PVDF), polytetrafluoroethylene (PTFE), styrene-butadiene rubber (SBR), polyimide (PI), polyamide-imide (PAI), polyvinyl chloride (PVC), polyacrylonitrile (PAN), modified polyphenylene oxide (PPO), polyethylene oxide (PEO), polyethylene (PE), polypropylene (PP), hydroxypropyl cellulose (HPC), carboxymethyl cellulose (CMC), polyvinyl alcohol (PVA), acrylic resins and the like. From the viewpoint of reduction of a load on environment and a human body, aqueous binders such as hydroxypropyl cellulose (HPC), carboxymethyl cellulose (CMC), polyvinyl alcohol (PVA) and acrylic resins are preferable. These binders may be used alone or may be used in combination of a plurality thereof.

### (Solvent)

Examples of the solvent include one or more of N-methyl-2-pyrrolidone, N,N-dimethylformaldehyde, alcohols, water and the like. From the viewpoint of reduction of a load on environment and a human body, water is preferable.

### (Negative electrode material)

Examples of a negative electrode material constituting the negative electrode of the lithium ion secondary battery include known negative electrode materials, for example, metallic lithium, carbon-based materials such as graphite, silicon-based materials such as a silicon thin film and SiO, tin-alloy-based materials such as copper-tin or cobalt-tin and the like. Among the above-mentioned negative electrode materials, in the case where a carbon-based material, a silicon-based material, a tin alloy-based material or the like that does not include lithium is used as a negative electrode material, short-circuiting between positive and negative electrodes, which results from production of dendrite, is less likely to arise, and a long service life of the lithium ion secondary battery can be achieved. Among these, a silicon-based material which is a high capacity negative electrode material is preferable, and a silicon thin film is more preferable since an electrode thickness can be made smaller, which is advantageous from the viewpoint of a capacity per a unit volume.

The electrode according to the embodiment of the present disclosure can be formed by mixing, for example, an active material, an electrically conductive additive, a binder and a solvent, kneading a mixture sufficiently to prepare a uniform slurry, and thereafter, applying the slurry to a current collector and drying it. Compounding amounts of the above-mentioned components are not limited particularly and for example, 3 to 50 parts by mass of the electrically conductive additive, 3 to 50 parts by mass of the binder and a proper amount of the solvent can be compounded based on 100 parts by mass of the active material.

The electrode according to the embodiment of the present disclosure is featured by perforating the current collector coated with the active material to form perforations penetrating in a thickness direction of the electrode. After the active material has been coated on the current collector, the current collector and the active material layer are perforated together, which makes fabrication and production of the electrode very easy and allows pre-doping of the lithium ion to advance efficiently when the pre-doping is performed.

When performing the perforation, it is possible to use a general method, for example, machine fabrication such as punching and laser fabrication. Further, arrangement of the perforations is not limited particularly and may be a general form such as a zigzag type, a square zigzag type, a parallel type or the like . Further, a shape of the perforation is not limited particularly, and generally a circular shape is employed.

A diameter of the perforation of the electrode is preferably 0.05 mm or more, more preferably 0.1 mm or more, further preferably 0.2 mm or more from the viewpoint of an efficiency of progressing the doping. Further, the diameter of the perforation is preferably 5.0 mm or less, more preferably 3.0 mm or less, further preferably 2.0 mm or less from the viewpoint of an energy density of the electrode.

A rate of hole area of the electrode is preferably 1.0% or more, more preferably 3.0% or more, further preferably 5.0% or more from the viewpoint of an efficiency of progressing the doping. Further, the rate of hole area is preferably 50% or less, more preferably 45% or less, further preferably 40% or less from the viewpoint of an energy density of the electrode.

An electrode weight per unit area is preferably 0.1 mAh/cm², more preferably 0.5 mAh/cm² or more, further preferably 1.0 mAh/cm² or more from the viewpoint of an energy density of the electrode.

A distance between the openings is preferably 1 to 20 mm, more preferably 1.5 to 15 mm, further preferably 2 to 10 mm.

A thickness of the electrode including the current collector is preferably 10 to 500 µm, more preferably 30 to 400 µm, further preferably 50 to 300 µm.

### <Lithium ion feeding member>

Elemental lithium metal (Li), a lithium alloy compound such as lithium-aluminum alloy, a lithium compound and the like can be used as a lithium ion feeding member. Examples of the lithium compound include LiFeO₂, LiCoO₂, LiNiO₂, LiMn₂O₄, Li₅FeO₄, Li₂MnO₃, LiFePO₄, LiV₂O₄ and the like.

By using an electrically conductive porous body such as a stainless steel mesh as a lithium metal current collector and filling preferably 80% or more of lithium metal in pore portions of the electrically conductive porous body, even if lithium is doped, a clearance generated between the electrodes due to disappearing of lithium is small and lithium can be carried on the active material smoothly.

### <Electrolyte>

An electrolyte constituting the lithium ion secondary battery may be a liquid or a solid having ion conductivity, and those analogous to a known electrolyte to be used on a lithium ion secondary battery can be used. From the viewpoint of high output characteristic of the battery, it is preferable to use those obtained by dissolving an alkali-metal salt serving as a supporting electrolyte in an organic solvent.

Examples of an organic solvent include at least one selected from nonaqueous solvents, such as ethylene carbonate, propylene carbonate, dimethyl carbonate, diethyl carbonate, ethyl methyl carbonate, dimethyl ether, γ-butyrolactone and acetonitrile. Preferred is ethylene carbonate, propylene carbonate or a solvent mixture thereof.

Examples of the supporting electrolyte include LiPF₆, LiBF₄, LiAsF₆, LiCF₃SO₃, LiI, LiClO₄ and the like, and LiPF₆ is preferable.

A concentration of the supporting electrolyte can be from about 0.5 mol/liter to 1.7 mol/liter. It is noted that the electrolyte is not limited to a liquid form. For example, in the case where the lithium-ion secondary battery is a lithium polymer secondary battery, the electrolyte may be a solid form (for example, a form of polymer gel) or an ionic liquid or a molten salt.

### <Separator>

The separator intervenes between the positive electrode and the negative electrode, thereby not only allowing the movements of ions between the positive electrode and the negative electrode but also functioning to prevent the positive electrode and the negative electrode from internally short-circuiting one another. When the lithium ion secondary battery is a hermetically-closed, a function of retaining the electrolytic solution is required for the separator.

As for a separator, it is preferable to use a thin-thickness and microporous or nonwoven-shaped film that is made of a material, such as polyethylene, polypropylene, polyacrylonitrile, aramid, polyimide, cellulose, glass or the like.

A diameter of separator hole is preferably 1 µm to 1,000 µm, more preferably 10 µm to 500 µm, further preferably 10 µm to 200 µm.

A thickness of the separator is preferably 1 µm to 100 µm, more preferably 5 µm to 50 µm, further preferably 10 µm to 40 µm.

A percentage of voids of the separator is preferably 10 to 90%, more preferably 30 to 85%, further preferably 50 to 80%.

A diameter of a separator fiber is preferably 0.001 µm to 100 µm, more preferably 0.01 µm to 20 µm, further preferably 0.1 µm to 10 µm.

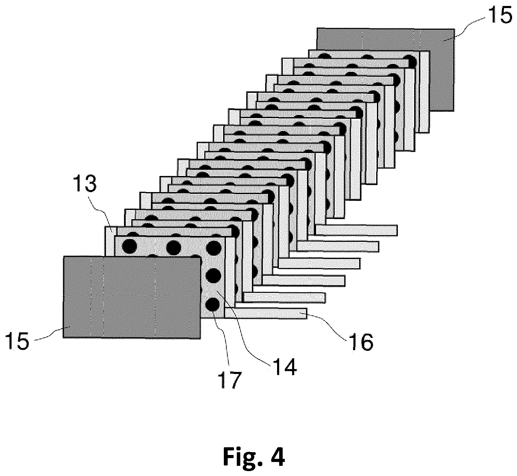

FIG. 4 is a schematic diagram showing arrangement of electrodes in the lithium ion battery device according to an embodiment of the present disclosure. Each of the positive electrodes 13 and negative electrodes 14 obtained by applying an active material on both sides of the current collectors which are then subjected to perforation and molding processes is arranged one by one with a separator being interposed therebetween to form a laminate. Further, a lithium ion feeding member 15 is arranged via a separator at least on one side or preferably on both sides of the outermost layers of the laminate in a laminating direction to form a laminate cell. It is preferable that the positive electrodes 13 and the negative electrodes 14 are laminated in such a manner that perforated holes 17 of the positive electrodes 13 and perforated holes 17 of the negative electrodes are aligned with each other. In the embodiment of the present disclosure, the laminate is not limited to one having a plurality of the positive electrodes 13 and a plurality of the negative electrodes 14 which are laminated alternately, and may be one obtained by laminating each one layer of the positive electrode 13 and the negative electrode 14 and one obtained by interposing either one of the positive electrode 13 or the negative electrode 14 between other electrodes.

### <Validation of pre-doping>

In the doping step, an active material may be doped with lithium ion by causing a short-circuit between the electrode at an end of a battery structure and the lithium ion feeding member 15. Or, doping of lithium ion may be effected by applying a voltage between the positive electrode 13 or the negative electrode 14 and the lithium ion feeding member 15. It is noted that a target electrode to be subjected to doping may be either of the positive electrode 13 or the negative electrode 14.

In order to measure an electric potential when the pre-doping is conducted, for example, electrically conductive pieces (tabs) 16 can be connected to a plurality of electrodes including an electrode located at a position most apart from the lithium ion feeding member 15. Further, the electrically conductive piece (tab) 16 may be connected to the lithium ion feeding member 15 according to necessity.

A degree of a doping progress can be confirmed by measuring open circuit voltages (OCV) of the respective electrodes subjected to doping. When the doping has been completed, a difference in OCV between a reference electrode (lithium metal) and the respective electrodes is small, and further, a difference in OCV depending on a position in the laminate (a distance from the lithium ion feeding member 15) becomes small. For example, when the difference in OCV between the negative electrode 14 positioned nearest to the lithium ion feeding member 15 and the negative electrode 14 positioned most apart from the lithium ion feeding member 15 is not more than 0.01 V, this can be used as a criterion for determining that the lithium doping has been completed.

In this case, it is preferable to measure the OCV after a lapse of a given period of time from initiation of OCV measurement. In the case where the pre-doping has not yet been completed, immediately after initiation of the OCV measurement, an electric potential being close to that of the reference electrode is shown, but the electric potential gradually increases after a lapse of time. In a lithium ion battery device according to the embodiment of the present disclosure, in the case where the OCV at least 500 seconds after the initiation of the OCV measurement does not change from the OCV immediately after starting of the doping, namely the OCV at the time of the initiation of the OCV measurement, it has been confirmed that an actual battery capacity being equal to its design capacity is exhibited. From this, for example, the case where a difference between the OCV immediately after the doping and the OCV 500 seconds after is 0.01 V or less can be a yardstick for judging that the lithium doping has been completed.

The shape of the lithium ion secondary battery according to the embodiment of the present disclosure is not limited particularly, and can be in various shapes such as cylindrical types, laminated types, coin types, button types and the like.

### EXAMPLE

The modes for carrying out the present invention are explained below. The present invention is explained by means of the following Examples, but is not limited to the Examples.

### Example 1

### <Preparation of sulfur-based active material>

### (Preparation of starting compound)

A high-cis butadiene rubber (UBEPOL (registered trade mark) BR150L manufactured by Ube Industries, Ltd., cis-1,4 bond content: 98% by mass) was used as a diene rubber; Denka Black manufactured by Denka Company Limited was used as an electrically conductive carbon material; precipitated sulfur manufactured by Tsurumi Chemical Industry Co., Ltd. was used as sulfur; and zinc diethyldithiocarbamate (NOCCELAR (registered trade mark) EZ manufactured by OUCHI SHINKO CHEMICAL INDUSTRY CO., LTD.) was used as a vulcanization accelerator.

A starting compound was prepared by compounding 1,000 parts by mass of the precipitated sulfur, 20 parts by mass of the electrically conductive carbon material and 25 parts by mass of the vulcanization accelerator to 100 parts by mass of the above-mentioned high-cis butadiene rubber and kneading an obtained mixture with a test kneader (MIX-LABO manufactured by Moriyama Company Ltd.). The obtained starting compound was finely pulverized with a cutter mill and was subjected to heat-treating.

### (Reaction apparatus)

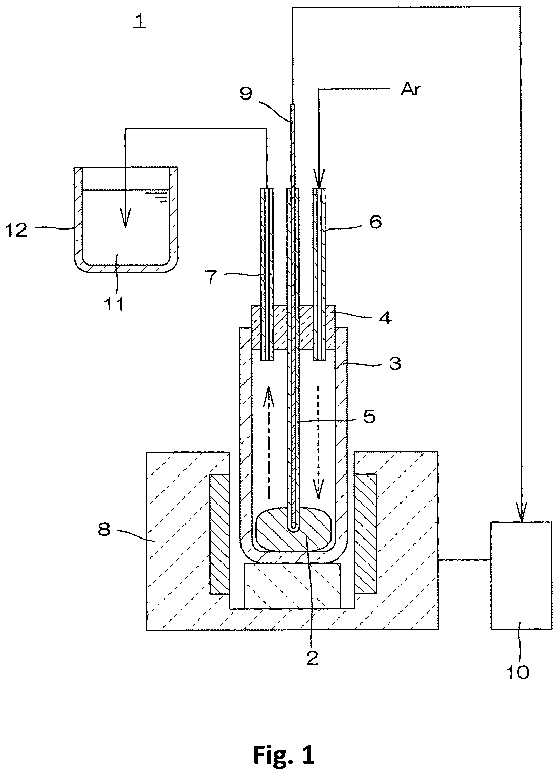

A reaction apparatus 1 as illustrated in Fig. 1 was used for heat treatment of the starting compound 2. The reaction apparatus 1 comprises a bottomed cylindrical reaction container 3, which has an outer diameter of 60 mm, an inner diameter of 50 mm and a height of 300 mm and is made of quartz glass, to contain and heat-treat the starting compound 2 therein; a silicone plug 4 for closing an upper opening of the reaction container 3; one alumina protection tube 5 ("Alumina SSA-S" available from NIKKATO CORPORATION, an outer diameter of 4 mm, an inner diameter of 2 mm and a length of 250 mm) and two tubes, which are a gas introducing tube 6 and a gas exhausting tube 7 (both are "Alumina SSA-S" available from NIKKATO CORPORATION, an outer diameter of 6 mm, an inner diameter of 4 mm and a length of 150 mm), these three tubes penetrating through the plug 4; and an electric furnace 8 (a crucible furnace, a diameter of opening: 80 mm, heating height: 100 mm) for heating the reaction container 3 from the bottom side.

The alumina protection tube 5 is formed in such a length that the lower part below plug 4 reaches the starting compound 2 contained in the bottom of the reaction container 3 and a thermocouple 9 is inserted through the inside of the alumina protection tube 5. The alumina protection tube 5 is used as a protective tube for the thermocouple 9. The leading end of the thermocouple 9 is inserted into the starting compound 2 while being protected by the closed leading end of the alumina protection tube 5 and functions to measure a temperature of the starting compound 2. Output of the thermocouple 9 is inputted in a temperature controller 10 of the electric furnace 8 as shown by the solid arrow in the drawing and the temperature controller 10 functions to control a heating temperature of the electric furnace 8 based on the input from the thermocouple 9.

The gas introducing tube 6 and the gas exhausting tube 7 are formed in such a manner that the bottom ends thereof project in 3 mm downwardly from the plug 4. Also, the upper part of the reaction container 3 projects from the electric furnace 8 to be exposed to atmosphere. Therefore, steam of sulfur generating from the starting compound due to heating of the reaction container 3 is raised to the upper part of the reaction container 3 as shown by the long dashed short dashed line arrow in the drawing, and transformed to a liquid drop while being cooled to be dropped and refluxed as shown by the broken line arrow in the drawing. Consequently, sulfur in the reaction system does not leak to the outside through the gas exhausting tube 7.

The gas introducing tube 6 is continuously supplied with argon gas from a gas supply system which is not shown. The gas exhausting tube 7 is connected to a trapping bath 12 containing an aqueous solution 11 of sodium hydroxide. The exhaust gas moving toward the outside through the gas exhausting tube 7 from the reaction container 3 is released to the outside after passing through the aqueous solution 11 of sodium hydroxide in the trapping bath 12. Therefore, even if hydrogen sulfide gas generated from a vulcanization reaction is included in the exhaust gas, the hydrogen sulfide gas is removed therefrom by being neutralized with the aqueous solution of sodium hydroxide.

### (Heat treatment step)

Heating with the electric furnace 8 was started 30 minutes after starting a continuous supply of argon gas to the reaction container 3 holding the starting compound 2 in its bottom at a flow rate of 80 ml/min from the gas supply system. The temperature elevation rate was 150°C/hr. When the temperature of the starting compound reached 450°C, heat treatment was conducted for two hours while maintaining the temperature of 450°C. Then, the starting compound 2 was cooled naturally under an argon gas atmosphere to 25°C while adjusting the flow rate of the argon gas and a reaction product was taken out of the reaction container 3.

### (Removal of unreacted sulfur)

The reaction product was pulverized in a mortar and 2 g of a pulverized product was put in a glass tube oven and heated for three hours at 250°C while vacuum suction was conducted to produce a sulfur-based active material in which unreacted sulfur was removed (or only a trace amount of unreacted sulfur was contained). The temperature elevation rate was 10°C/min.

### (Raman spectrum analysis)

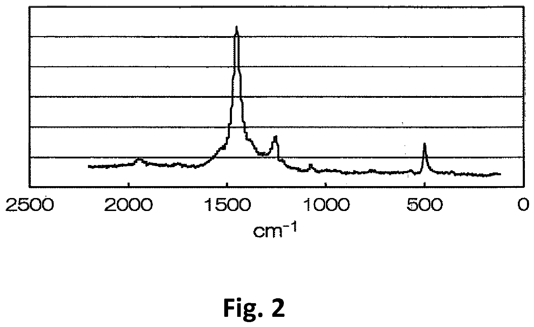

The obtained sulfur-based active material was subjected to Raman spectrum analysis with a laser Raman microscope RAMAN-11 available from Nanophoton Corporation under the conditions of an excitation wavelength λ=532 nm, a grating of 600 gr/mm, and a resolution of 2 cm⁻¹ (FIG. 2). It is noted that in FIG. 2, an ordinate axis shows a relative strength, and an abscissa axis shows a Raman shift (cm⁻¹). The obtained sulfur-based active material has peaks at 500 cm⁻¹, 1250 cm⁻¹, 1450 cm⁻¹ and 1940 cm⁻¹ of Raman shift, and it was confirmed that these results coincide well with the results of elemental analysis showing that a lot of sulfur was introduced and a hydrogen amount was reduced.

While these spectra of FIG. 2 differ from spectra called D band 1350 cm⁻¹ and G band 1590 cm⁻¹ which are seen in a graphite structure of 6-membered ring and are analogous to thienoacene spectra described in the document (Chem. Phys. Chem., 2009, 10, 3069-3076), it is presumed that the obtained sulfur-based active material has the thienoacene structure represented by the above-mentioned formula (i).

### (FT-IR spectrum analysis)

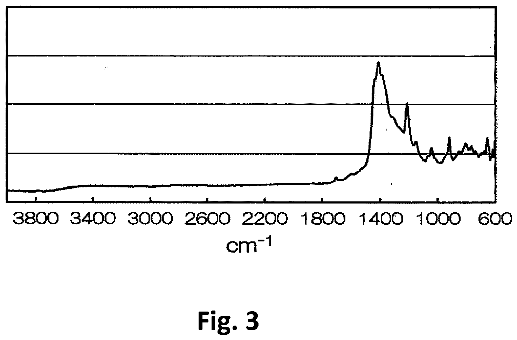

The obtained sulfur-based active material was subjected to FT-IR spectrum analysis by a diffused reflection method under the conditions of a resolution: 4 cm⁻¹, the number of accumulations: 100 times and a measuring range: 400 to 4000 cm⁻¹ using a Fourier transform infrared spectrophotometer IR Affinity-1 available from Shimadzu Corporation (FIG. 3). In FT-IR spectrum of the obtained sulfur-based active material, the peaks are present at 917 cm⁻¹, 1042 cm⁻¹, 1149 cm⁻¹, 1214 cm⁻¹, 1388 cm⁻¹, 1415 cm⁻¹ and 1439 cm⁻¹, and it was confirmed that these results coincide well with the results of elemental analysis showing that a lot of sulfur was introduced and a hydrogen amount was reduced.

### <Production of lithium ion secondary battery>

### (Positive electrode)

The above mentioned sulfur-based active material, an electrically conductive additive (acetylene black (Denka Black available from Denka Co., Ltd.)/VGCF =4:1) and an aqueous acrylic resin were measured so that the compounding ratio thereof became the sulfur-based active material : the electrically conductive additive : the aqueous acrylic resin = 90:5:5 (% by mass), and were put into a container. While adjusting a viscosity of the mixture using water as a dispersant, the mixture was subjected to stirring and mixing with a rotation/revolution mixer (ARE-250 available from Thinky Corporation) to prepare a uniform slurry. The prepared slurry was applied onto a 15 µm thick carbon-coated aluminum foil with an applicator, followed by 3-hour heating at 150°C. Thus, a positive electrode 13 for a lithium ion secondary battery was produced.

### (Negative electrode)

The active material shown in Table 1 to Table 4, an acetylene black (Denka Black available from Denka Co., Ltd.) and the binder shown in Table 1 to Table 4were measured so that the compounding ratio thereof became the active material : the acetylene black : the binder = 90:5:5 (% by mass), and were put into a container. While adjusting a viscosity of the mixture using water as a dispersant, the mixture was subjected to stirring and mixing with a rotation/revolution mixer (ARE-250 available from Thinky Corporation) to prepare a uniform slurry. The prepared slurry was applied onto a 10 µm thick current collector with an applicator, followed by 3-hour heating at 150°C with a dryer. Thus, a negative electrode 14 was produced.

### (Fabrication of electrodes)

The positive electrodes 13 and the negative electrodes 14 were subjected to perforation fabrication in a given diameter of an opening at a given rate of hole area with laser beam machine. A shape of an opening portion (perforation 17) was a circle, and arrangement of the perforations was of a square zigzag type (a zigzag type at 45°). Further, the perforated positive electrodes 13 and negative electrodes 14 were subjected to fabrication by cutting to obtain the coated portion of 50 mm × 50 mm. Furthermore, a tab was attached to each negative electrode 14 to enable an open circuit voltage (OCV) to be measured independently.

### (Lithium ion feeding member)

The lithium ion feeding member 15 was formed by attaching a lithium metal foil to a current collector made of an electrically conductive porous body such as a stainless steel mesh. Further, a tab was attached to the lithium ion feeding member 15 in the same manner as in the negative electrodes.

### (Electrolytic solution)

A non-aqueous electrolyte prepared by dissolving LiPF₆ at a concentration of 1.0 mol/liter in a solvent mixture obtained by mixing ethylene carbonate and diethyl carbonate in a volume ratio of 1:1 was used as an electrolytic solution.

### (Preparation of battery)

The above positive electrodes 13 and negative electrodes 14 subjected to fabrication for perforation were arranged alternately with separators (Celgard 2400, microporous polypropylene film having a thickness of 25 µm and manufactured by Celgard, LLC) interposed therebetween to make a laminate. Further, lithium ion feeding members 15 obtained by attaching a lithium metal foil to a stainless steel porous foil with a separator interposed therebetween were disposed on the outermost layers at both sides of the laminate, thus preparing a triple laminated unit comprising the positive electrodes 13 the negative electrodes 14, the lithium ion feeding members 15 and the separators. This triple laminated unit was packaged with an external aluminum laminate, and the above-mentioned electrolytic solution was poured therein to prepare a battery device. In this case, among the negative electrodes 14 targeted for doping of lithium ion, each of the electrically conductive pieces (tabs) 16 electrically connected to a plurality of negative electrodes 14 including a negative electrode 14 located at a position most apart from the lithium ion feeding member 15 and the electrically conductive pieces (not shown) electrically connected to the lithium ion feeding members 15 were exposed to the outside of the lithium ion battery device so that the electrically conductive pieces do not come into contact with each other.

### (Pre-doping)

After assembly of the battery device, the negative electrodes 14 were doped with lithium ion for a predetermined period of doping time by causing short-circuit between the negative electrodes 14 and the lithium ion feeding member 15. Thereafter the OCV of each negative electrode 14 after 500 seconds from starting of the OCV measurement was measured using the lithium ion feeding member 15 as a reference electrode. In the case where a difference in the OCV between the negative electrode 14 located nearest to the lithium ion feeding member 15 and the negative electrode 14 located at a position most apart from the lithium ion feeding member 15 is 0.004 V or less, lithium doping is judged to have been completed. A degree of doping progressing was evaluated by five-grade-evaluation. When the doping has been completed or has been substantially completed, it is indicated by a score 5. The evaluation was made based on comparison of a design capacity with an actual capacity (if an actual capacity is small, a degree of progressing is not good) and increase in an electric potential from starting of the OCV measurement of each negative electrode 14 (if the doping has been progressed sufficiently, there is no increase in an electric potential).

### Comparative Example 1

A battery was prepared and evaluation was made in the same manner as in Example 1 except that fabrication for perforation was not conducted for a positive electrode 13 and a negative electrode 14.

### <Elemental analysis>

Sulfur contents in total amounts of sulfur-based active materials obtained in Example 1 and Comparative Example 1 were measured with a full automatic elemental analysis device (vario MICRO cube manufactured by Elementar Analysensysteme GmbH).

The results are shown in Tables 1 to 4.

**Table 1**

| | Example | | | | | | | |
|---|---|---|---|---|---|---|---|---|
| | 1 | 2 | 3 | 4 | 5 | 6 | 7 | 8 |

| Positive electrode | | | | | | | | |
|---|---|---|---|---|---|---|---|---|
| Sulfur content (%) | 55.3 | 55.3 | 55.3 | 55.3 | 55.3 | 55.3 | 55.3 | 55.3 |
| Electrode size | 50^{∗}50 | 165^{∗}115 | 50^{∗}50 | 50^{∗}50 | 50^{∗}50 | 50^{∗}50 | 50^{∗}50 | 50^{∗}50 |
| Electrode thickness (including current collector) (µm) | 150 | 150 | 150 | 150 | 150 | 150 | 150 | 150 |
| Weight per unit area (mAh/ cm²) | 1.5 | 1.5 | 1.5 | 1.5 | 1.5 | 1.5 | 1.5 | 1.5 |
| Diameter of opening (mm) | 0.4 | 0.4 | 0.4 | 1.8 | 1.8 | 1.8 | 1.8 | 1.8 |
| Distance between openings (mm) | 2.08 | 2.08 | 2.08 | 3.57 | 3.57 | 3.57 | 4.55 | 4.55 |
| Rate of hole area (%) | 5.55 | 5.55 | 5.55 | 37.2 | 37.2 | 37.2 | 22.4 | 22.4 |

| Negative electrode | | | | | | | | |
|---|---|---|---|---|---|---|---|---|
| Current collector | Copper foil | Copper foil | Copper foil | Copper foil | Copper foil | Copper foil | Copper foil | Copper foil |
| Active material | Graphite | Graphite | Graphite | Graphite | Graphite | Graphite | Graphite | Graphite |
| Binder | PVdF | PVdF | PVdF | PVdF | PVdF | PVdF | PVdF | PVdF |
| Electrode size | 50^{∗}50 | 170^{∗}120 | 50^{∗}50 | 50^{∗}50 | 50^{∗}50 | 50^{∗}50 | 50^{∗}50 | 50^{∗}50 |
| Electrode thickness (including current collector) (µm) | 190 | 190 | 190 | 190 | 190 | 190 | 190 | 190 |
| Weight per unit area (mAh/ cm²) | 3.6 | 3.6 | 3.6 | 3.6 | 3.6 | 3.6 | 3.6 | 3.6 |
| Diameter of opening (mm) | 0.4 | 0.4 | 0.4 | 1.8 | 1.8 | 1.8 | 1.8 | 1.8 |
| Distance between openings (mm) | 2.08 | 2.08 | 2.08 | 3.57 | 3.57 | 3.57 | 4.55 | 4.55 |
| Rate of hole area (%) | 5.55 | 5.55 | 5.55 | 37.2 | 37.2 | 37.2 | 22.4 | 22.4 |

| | Example | | | | | | | |
|---|---|---|---|---|---|---|---|---|
| | 1 | 2 | 3 | 4 | 5 | 6 | 7 | 8 |
| Battery | | | | | | | | |
| Number of laminated layers (positive electrode/negative electrode) | 4/5 | 4/5 | 11/12 | 11/12 | 14/15 | 14/15 | 11/12 | 11/12 |
| Position of through-holes | not aligned | not aligned | not aligned | aligned | aligned | aligned | aligned | aligned |
| Doping time (h) | 168 | 191 | 401 | 264 | 185 | 254 | 187 | 255 |
| Degree of progress of doping | 4 | 5 | 3 | 4 | 4 | 5 | 4 | 5 |

**Table 2**

| | Example | | | | | | | |
|---|---|---|---|---|---|---|---|---|
| | 9 | 10 | 11 | 12 | 13 | 14 | 15 | 16 |
| Positive electrode | | | | | | | | |
| Sulfur content (%) | 55.3 | 55.3 | 55.3 | 55.3 | 55.3 | 55.3 | 55.3 | 55.3 |
| Electrode size | 50^{∗}50 | 50^{∗}50 | 50^{∗}50 | 50^{∗}50 | 50^{∗}50 | 50^{∗}50 | 50^{∗}50 | 50^{∗}50 |
| Electrode thickness (including current collector) (µm) | 150 | 150 | 150 | 150 | 150 | 150 | 150 | 150 |
| Weight per unit area (mAh/ cm²) | 1.5 | 1.5 | 1.5 | 1.5 | 1.5 | 1.5 | 1.5 | 1.5 |
| Diameter of opening (mm) | 1.8 | 1.8 | 1.8 | 1.8 | 1.8 | 1.8 | 0.9 | 0.9 |
| Distance between openings (mm) | 5.55 | 5.55 | 6.25 | 6.25 | 8.33 | 8.33 | 2.77 | 2.77 |
| Rate of hole area (%) | 14.8 | 14.8 | 11.5 | 11.5 | 6.2 | 6.2 | 15.6 | 15.6 |

| Negative electrode | | | | | | | | |
|---|---|---|---|---|---|---|---|---|
| Current collector | Copper foil | Copper foil | Copper foil | Copper foil | Copper foil | Copper foil | Copper foil | Copper foil |
| Active material | Graphite | Graphite | Graphite | Graphite | Graphite | Graphite | Graphite | Graphite |
| Binder | PVdF | PVdF | PVdF | PVdF | PVdF | PVdF | PVdF | PVdF |
| Electrode size | 50^{∗}50 | 50^{∗}50 | 50^{∗}50 | 50^{∗}50 | 50^{∗}50 | 50^{∗}50 | 50^{∗}50 | 50^{∗}50 |
| Electrode thickness (including current collector) (µm) | 190 | 190 | 190 | 190 | 190 | 190 | 190 | 190 |
| Weight per unit area (mAh/ cm²) | 3.6 | 3.6 | 3.6 | 3.6 | 3.6 | 3.6 | 3 | 3 |
| Diameter of opening (mm) | 1.8 | 1.8 | 1.8 | 1.8 | 1.8 | 1.8 | 0.9 | 0.9 |
| Distance between openings (mm) | 5.55 | 5.55 | 6.25 | 6.25 | 8.33 | 8.33 | 2.77 | 2.77 |
| Rate of hole area (%) | 14.8 | 14.8 | 11.5 | 11.5 | 6.2 | 6.2 | 15.6 | 15.6 |

| | | | | Example | | | | |
|---|---|---|---|---|---|---|---|---|
| | 9 | 10 | 11 | 12 | 13 | 14 | 15 | 16 |
| Battery | | | | | | | | |
| Number of laminated layers (positive electrode/negative electrode) | 10/11 | 10/11 | 10/11 | 10/11 | 9/10 | 9/10 | 10/11 | 10/11 |
| Position of through-holes | aligned | aligned | aligned | aligned | aligned | aligned | aligned | aligned |
| Doping time (h) | 188 | 259 | 189 | 259 | 189 | 260 | 191 | 382 |
| Degree of progress of doping | 4 | 5 | 3 | 3 | 2 | 3 | 2 | 5 |

**Table 3**

| | | | | Example | | | | |
|---|---|---|---|---|---|---|---|---|
| | 17 | 18 | 19 | 20 | 21 | 22 | 23 | 24 |
| Positive electrode | | | | | | | | |
| Sulfur content (%) | 54.1 | 54.1 | 54.1 | 54.1 | 55.3 | 55.3 | 54.1 | 54.1 |
| Electrode size | 50^{∗}50 | 50^{∗}50 | 50^{∗}50 | 50^{∗}50 | 50^{∗}50 | 50^{∗}50 | 50^{∗}50 | 50^{∗}50 |
| Electrode thickness (including current collector) (µm) | 90 | 90 | 150 | 150 | 150 | 150 | 90 | 90 |
| Weight per unit area (mAh/ cm²) | 1 | 1 | 1 | 1 | 1.5 | 1.5 | 1 | 1 |
| Diameter of opening (mm) | 1.8 | 0.4 | 1.8 | 1.8 | 0.4 | 0.06 | 0.4 | 0.4 |
| Distance between openings (mm) | 8.3 | 2.08 | 3.57 | 4.55 | 2.08 | 0.74 | 2.08 | 2.08 |
| Rate of hole area (%) | 4.68 | 5.55 | 37.2 | 22.4 | 5.55 | 1 | 5.55 | 5.55 |

| Negative electrode | | | | | | | | |
|---|---|---|---|---|---|---|---|---|
| Current collector | Copper foil | Copper foil | SUS foil | SUS foil | SUS foil | SUS foil | SUS foil | SUS foil |
| Active material | Graphite | Graphite | SiO | SiO | SiO | SiO | SiO | SiO |
| Binder | PVdF | PVdF | Polyimide | Polyimide | Polyimide | Polyimide | Polyimide | Polyimide |
| Electrode size | 50^{∗}50 | 50^{∗}50 | 50^{∗}50 | 50^{∗}50 | 50^{∗}50 | 50^{∗}50 | 50^{∗}50 | 50^{∗}50 |
| Electrode thickness (including current collector) (µm) | 190 | 190 | 60 | 60 | 60 | 60 | 60 | 60 |
| Weight per unit area (mAh/ cm²) | 3.6 | 3.6 | 3 | 3 | 3 | 3 | 3 | 3 |
| Diameter of opening (mm) | 1.8 | 0.4 | 1.8 | 1.8 | 0.4 | 0.06 | 0.4 | 0.4 |
| Distance between openings (mm) | 8.3 | 2.08 | 3.57 | 4.55 | 2.08 | 0.74 | 2.08 | 2.08 |
| Rate of hole area (%) | 4.68 | 5.55 | 37.2 | 22.4 | 5.55 | 1 | 5.55 | 5.55 |

| | | | | Example | | | | |
|---|---|---|---|---|---|---|---|---|
| | 17 | 18 | 19 | 20 | 21 | 22 | 23 | 24 |
| Battery | | | | | | | | |
| Number of laminated layers (positive electrode/negative electrode) | 3/4 | 3/4 | 6/7 | 6/7 | 7/8 | 7/8 | 3/4 | 7/8 |
| Position of through-holes | aligned | not aligned | aligned | aligned | not aligned | not aligned | not aligned | not aligned |
| Doping time (h) | 91 | 91 | 266 | 265 | 145 | 260 | 86 | 86 |
| Degree of progress of doping | 2 | 4 | 5 | 5 | 2 | 2 | 4 | 3 |

**Table 4**

| | Comparative Example 1 |
|---|---|
| Positive electrode | |
| Sulfur content (%) | 55.3 |
| Electrode size | 50^{∗}50 |
| Electrode thickness (including current collector) (µm) | 150 |
| Weight per unit area (mAh/cm²) | 1.5 |
| Diameter of opening (mm) | - |
| Distance between openings (mm) | - |
| Rate of hole area (%) | - |

| Negative electrode | |
|---|---|
| Current collector | Copper foil |
| Active material | Graphite |
| Binder | PVdF |
| Electrode size | 50^{∗}50 |
| Electrode thickness (including current collector) (µm) | 190 |
| Weight per unit area (mAh/cm²) | 3.6 |
| Diameter of opening (mm) | - |
| Distance between openings (mm) | - |
| Rate of hole area (%) | - |

| Battery | |
|---|---|
| Number of laminated layers (positive electrode/negative electrode) | 4/5 |
| Position of through-holes | - |
| Doping time (h) | 168 |
| Degree of progress of doping | 1 |

According to the present invention, a high capacity lithium-ion battery device can be manufactured by safe and simple pre-doping operation.

## Claims

1. A method of manufacturing a lithium ion battery device comprising positive electrodes (13) and negative electrodes (14) which are laminated with each other, wherein an active material used on the positive electrodes (13) is a sulfur-based active material having a total sulfur content of not less than 50% by mass measured by an elementary analysis, the method comprising:
a step of forming, on the positive electrodes (13) and the negative electrodes (14), through-holes (17) comprising perforating the current collector coated with the active material to form perforations penetrating in a thickness direction of the electrode,
a step of laminating the positive electrodes (13) and the negative electrodes (14) and disposing a lithium ion feeding source (15) on at least one side of a laminating direction thereof, and
a step of allowing lithium derived from the lithium ion feeding source (15) to be carried on the positive electrodes (13) or the negative electrodes (14).

2. The method of manufacturing a lithium ion battery device of claim 1, wherein a diameter of openings of the through-holes (17) formed on the positive electrodes (13) and the negative electrodes (14) is 0.05 mm or more and a rate of a hole area is 1.0% or more.

3. The method of manufacturing a lithium ion battery device of claim 1 or 2, wherein the positive electrodes (13) and the negative electrodes (14) are laminated so that the through-holes (17) formed on the positive electrodes (13) are aligned with the through-holes (17) formed on the negative electrodes (14).

4. The method of manufacturing a lithium ion battery device of any one of claims 1 to 3, wherein the active material used on the positive electrodes (13) comprises a carbon-sulfur structure having peaks at 500 cm⁻¹, 1,250 cm⁻¹, and 1,450 cm⁻¹ of a Raman shift in a Raman spectrum.

5. The method of manufacturing a lithium ion battery device of any one of claims 1 to 4, wherein the negative electrodes (14) have a layer composed of a carbon material, a silicon material, a tin alloy material or a material produced by compounding thereof.

## Patentansprüche

1. Verfahren zur Herstellung einer Lithiumionen-Batterie-Vorrichtung, die positive Elektroden (13) und negative Elektroden (14) umfasst, welche aufeinander geschichtet sind, wobei ein an den positiven Elektroden (13) verwendetes Aktivmaterial ein schwefelbasiertes Aktivmaterial ist, das einen Gesamtschwefelgehalt von nicht weniger als 50 Massenprozent, gemessen durch eine Elementaranalyse, aufweist, wobei das Verfahren umfasst:
einen Schritt, in dem Durchgangslöcher (17) an den positiven Elektroden (13) und den negativen Elektroden (14) gebildet werden, der das Perforieren des mit dem Aktivmaterial beschichteten Stromkollektors umfasst, um in einer Dickenrichtung der Elektrode durchdringende Perforierungen zu bilden,
einen Schritt, in dem die positiven Elektroden (13) und die negativen Elektroden (14) geschichtet werden und eine Lithiumionen-Zufuhr-Quelle (15) an zumindest einer Seite einer Schichtungsrichtung derselben angeordnet wird, und
einen Schritt, in dem ermöglicht wird, dass aus der Lithiumionen-Zufuhr-Quelle (15) stammendes Lithium an die positiven Elektroden (13) oder die negativen Elektroden (14) befördert wird.

2. Verfahren zur Herstellung einer Lithiumionen-Batterie-Vorrichtung nach Anspruch 1, wobei ein Durchmesser von Öffnungen der an den positiven Elektroden (13) und den negativen Elektroden (14) gebildeten Durchgangslöcher (17) 0,05 mm oder mehr beträgt und ein Anteil einer Lochfläche 1,0% oder mehr beträgt.

3. Verfahren zur Herstellung einer Lithiumionen-Batterie-Vorrichtung nach Anspruch 1 oder 2, wobei die positiven Elektroden (13) und die negativen Elektroden (14) so geschichtet werden, dass die an den positiven Elektroden (13) gebildeten Durchgangslöcher (17) auf die an den negativen Elektroden (14) gebildeten Durchgangslöcher (17) ausgerichtet sind.

4. Verfahren zur Herstellung einer Lithiumionen-Batterie-Vorrichtung nach einem der Ansprüche 1 bis 3, wobei das an den positiven Elektroden (13) verwendete Aktivmaterial eine Kohlenstoff-Schwefel-Struktur umfasst, die Peaks bei 500 cm⁻¹, 1250 cm⁻¹ und 1450 cm⁻¹ einer Raman-Verschiebung in einem Raman-Spektrum aufweist.

5. Verfahren zur Herstellung einer Lithiumionen-Batterie-Vorrichtung nach einem der Ansprüche 1 bis 4, wobei die negativen Elektroden (14) eine Schicht aufweisen, die mit einem Kohlenstoffmaterial, einem Siliciummaterial, einem Zinnlegierungsmaterial oder einem durch Vermischen derselben erzeugten Material zusammengesetzt ist.

## Revendications

1. Procédé de fabrication d'un dispositif de batterie au lithium-ion comprenant des électrodes positives (13) et des électrodes négatives (14) qui sont stratifiées les unes avec les autres, dans lequel un matériau actif utilisé sur les électrodes positives (13) est un matériau actif à base de soufre ayant une teneur totale en soufre non inférieure à 50 % en poids mesurée par une analyse élémentaire, le procédé comprenant :
une étape de formation, sur les électrodes positives (13) et les électrodes négatives (14), de trous traversants (17) comprenant le perçage du collecteur de courant recouvert du matériau actif pour former les perçages pénétrant dans le sens de l'épaisseur de l'électrode,
une étape de stratification des électrodes positives (13) et des électrodes négatives (14) et de mise en place d'une source d'alimentation en ions lithium (15) sur au moins un côté du sens de la stratification de celles-ci, et une étape pour permettre au lithium provenant de la source d'alimentation en ions lithium (15) d'être transporté sur les électrodes positives (13) ou les électrodes négatives (14).

2. Procédé de fabrication d'un dispositif de batterie au lithium-ion selon la revendication 1, dans lequel le diamètre des ouvertures des trous traversants (17) formés sur les électrodes positives (13) et les électrodes négatives (14) est supérieur ou égale à 0,05 mm et une proportion de la surface des trous est supérieure ou égale à 1 %.

3. Procédé de fabrication d'un dispositif de batterie au lithium-ion selon la revendication 1 ou la revendication 2, dans lequel les électrodes positives (13) et les électrodes négatives (14) sont stratifiées, de sorte que les trous traversants (17) formés sur les électrodes positives (13) sont alignés avec les trous traversants (17) formés sur les électrodes négatives (14).

4. Procédé de fabrication d'un dispositif de batterie au lithium-ion selon l'une quelconque des revendications 1 à 3, dans lequel le matériau actif utilisé sur les électrodes positives (13) comprend une structure carbone-soufre ayant des pics à 500 cm⁻¹, 1 250 cm⁻¹ et 1450 cm⁻¹ de décalage Raman dans un spectre Raman.

5. Procédé de fabrication d'un dispositif de batterie au lithium-ion selon l'une quelconque des revendications 1 à 4, dans lequel les électrodes négatives (14) ont une couche composée d'un matériau en carbone, d'un matériau en silicium, d'un matériau en alliage d'étain ou d'un matériau produit par compoundage de ceux-ci.
